# EUROPEAN PATENT APPLICATION

(11) **EP 1 758 196 A1**
(43) Date of publication of application: **28.02.2007**
(21) Application number: 06017349.9
(22) Date of filing: 21.08.2006
(51) Int. Cl.: H01M 8/04, H01M 8/24

(54) **Extingushing system for fuel cell**

(30) Priority: 22.08.2005 KR 20050077002
(71) Applicant: LG Electronics Inc., Yongdungpo-gu Seoul (KR); LG Chem, Ltd., Yongdungpo-Gu Seoul (KR)
(72) Inventor: Kim, Ki-Dong, Gimpo Gyeonggi-Do (KR); Youk, Hyung-Kyu, Suwon Gyeonggi-Do (KR)
(74) Representative: Urner, Peter

(57) **Abstract**

An extinguishing system for a fuel cell system comprises: a temperature sensing unit installed at the stack unit; an extinguishing unit operated according to a value sensed by the temperature sensing unit; and a control unit electrically connected to the temperature sensing unit and the extinguishing unit. Even if the system is overheated, or a fire takes place, this is sensed and the water filled in the water storage tank is automatically sprayed on the fuel cell stack, thereby preventing overheating of the fuel cell. Even in case of fire, the fire is rapidly extinguished at an early stage, thereby ensuring the stability of the system and preventing the risk of a fire in a building caused by the fuel cell.

## Description

### BACKGROUND OF THE INVENTION

### 1. Field of the Invention

The present invention relates to a fuel cell, and more particularly to, an extinguishing system for a fuel cell which can prevent overheating or a fire in the fuel cell.

### 2. Description of the Related Art

In general, a fuel cell is a device for directly transforming energy of a fuel into electric energy. Such a fuel cell is a fuel cell system in which an anode and a cathode are installed on both sides of a polymer electrolyte film, and which generates electrical energy by the movement of electrons created when electrochemical oxidation of oxygen serving as a fuel occurs at the cathode (oxidized electrode or fuel electrode) and electrochemical reduction of oxygen serving as an oxidizer occurs at the cathode (reduced electrode or air electrode), which may be referred to as a kind of power generation plant.

The aforementioned fuel cell is classified into an alkaline fuel cell (AFC), a phosphoric acid fuel cell (PAFC), a molten carbonate fuel cell (MCFC), a solid electrolyte fuel cell (SOFC), a polymer electrolyte fuel cell (PEMFC), and so forth, depending on operating temperature and the type of main fuels. Among them, the electrolyte of the polymer electrolyte fuel cell is not liquid but a solid polymer membrane, which is distinguished from other fuel cell types. In the polymer electrolyte fuel cell, fuels can be used typically in such a manner that a hydrocarbon (CH) fuel, such as LNG, LPG, etc, is refined into hydrogen (H₂) through desulfurization, reforming reaction, and hydrogen refining process at a reforming unit, and the refined hydrogen is supplied to the fuel electrode of a stack unit.

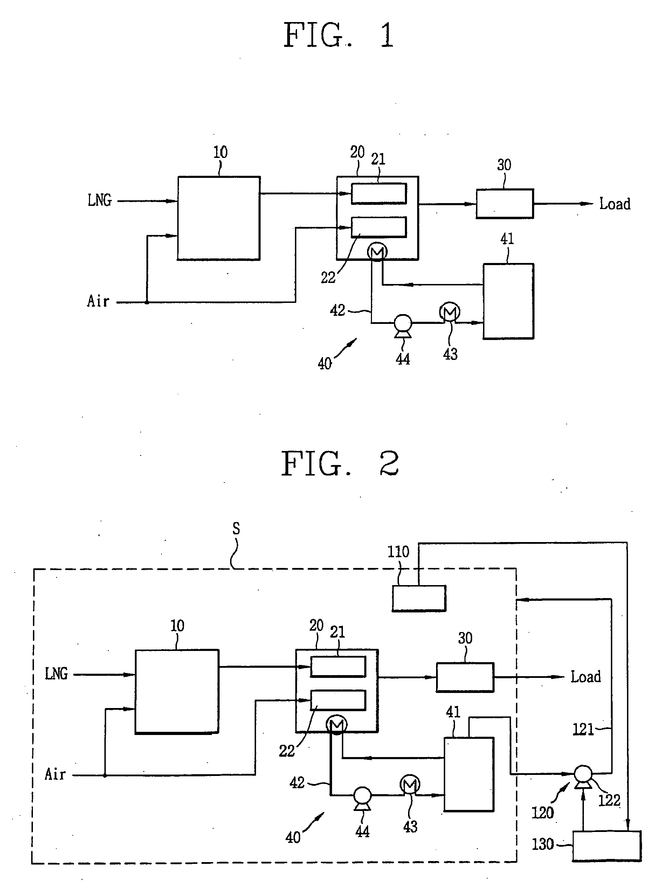

FIG. 1 is a systematic view of a PEMFC (Proton Exchange fuel cell) type fuel cell in which a hydrocarbon (CH) fuel, CH₃OH etc ("LPG" in the drawing), is refined into hydrogen (H₂) through desulfurization, reforming reaction, and hydrogen refining process at a reformer and used as a fuel.

As shown therein, the prior art fuel cell includes a reforming unit 10 refining hydrogen from LNG, a stack unit 20 connected to the reforming unit 10, and provided with a fuel electrode 21 to receive refined hydrogen and an air electrode 22 to receive oxygen in the air, for producing electricity and heat by an electrochemical reaction between hydrogen and oxygen, an electricity conversion unit 30 connected to the output side of the stack unit 20, for converting electricity and supplying the same to a load, a heat exchange unit 40 supplying water to the reforming unit 10 and the stack unit 20 and cooling the reforming unit 10 and the stack unit 20, and a control unit (not shown) electrically connected to the above-described units 10, 20, 30 and 40, for controlling the same.

The heat exchange unit 40 includes a water storage tank 41 for charging a predetermined quantity of water therein, a cooling water line 42 for connecting between the stack unit 20 and the water storage tank 41 in a cyclic fashion, a heat radiator 43 installed at a middle portion of the cooling water line 42, for cooling the water recovered from the stack unit 20 to the water storage tank 41, and a circulation pump 44 installed at a middle portion of the cooling water line 42 and pumping the water of the water storage tank 41 and supplying the pumped water to the stack unit 20 and so forth.

The above-described prior art fuel cell operates as follows.

That is, a hydrocarbon fuel is reformed at the reforming unit 10 and refined into hydrogen, and the hydrogen is supplied to the fuel electrode 41 of the stack unit 20 while air is supplied to the air electrode 22 of the stack unit 20, thereby causing an oxidation reaction at the fuel electrode 21 and a reduction reaction at the air electrode 22. Electrons created in this process generate electricity while moving from the fuel electrode 41 to the air electrode 42, and this electricity is transformed to AC electricity and thus supplied to various kinds of electric appliances.

Here, since the stack unit generates heat along with electricity, the stack unit 20 and so forth are cooled by repeating a series of procedures of operating the circulation pump 43 of the heat exchange unit 40 to supply the water filled in the water storage tank 41 to the stack unit 20 via the cooling water line 42 and recovering the water.

However, in the above-described prior art fuel cell, there is no particular extinguishing system even though the fuel cell is exposed to the risk of a fire due to overheating or the like because of the characteristics of the system that generates electricity and heat. Thus, there are limitations in controlling a fire at an early stage in case of fire.

### BRIEF DESCRIPTION OF THE INVENTION

Therefore, the present invention has been made in consideration of the above problems of the prior art fuel cell, and has as its object to provide an extinguishing system for a fuel cell, which can prevent fire breaking or spreading by automatically operating the extinguishing function if the system is overheated above a preset temperature.

To achieve these and other advantages and in accordance with the purpose of the present invention, as embodied and broadly described herein, there is provided an extinguishing system for a fuel cell, including: a stack unit provided with a fuel electrode and an air electrode, for creating an electrical energy and a thermal energy by an electrochemical reaction between hydrogen and oxygen; a temperature sensing unit installed at the stack unit, for sensing a temperature of the stack unit; an extinguishing unit for switching to an extinguish mode for operation if the temperature sensed by the temperature sensing unit is greater than the preset temperature; and a control unit electrically connected to the temperature sensing unit and the extinguishing unit, for controlling the operation of the extinguishing unit depending on a temperature change sensed by the temperature sensing unit.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a systematic view of one example of a prior art fuel cell;
FIG. 2 is a systematic view of one example of a fuel cell with an extinguishing system according to the present invention; and
FIG. 3 is a systematic view of a modified example of a fuel cell with an extinguishing system according to the present invention.

### DETAILED DESCRIPTION OF THE INVENTION

Hereinafter, an extinguishing system of a fuel cell according to the present invention will be described with reference to one embodiment which is illustrated in the accompanying drawings.

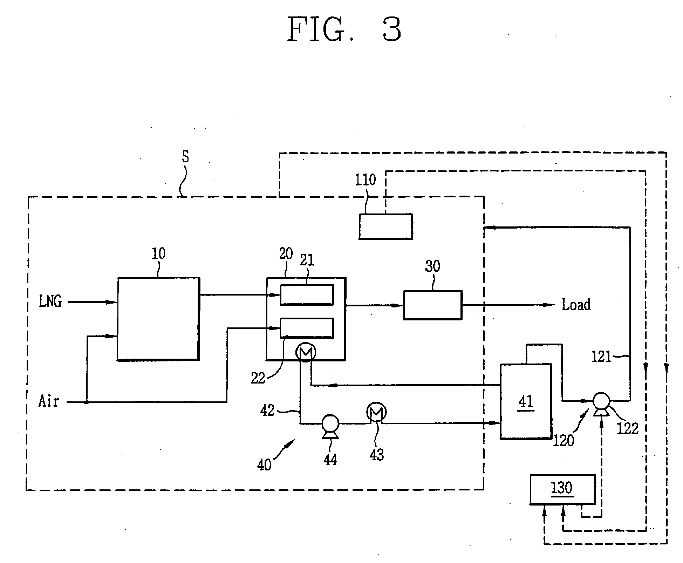

FIG. 2 is a systematic view of one example of a fuel cell with an extinguishing system according to the present invention. FIG. 3 is a systematic view of a modified example of a fuel cell with an extinguishing system according to the present invention.

As shown therein, the fuel cell according to the present invention includes a reforming unit 10 refining hydrogen from LNG, a stack unit 20 provided with a fuel electrode 21 to receive refined hydrogen and an air electrode 22 to receive oxygen from the air, for producing electricity and heat by an electrochemical reaction between hydrogen and oxygen, an electricity conversion unit 30 connected to the output side of the stack unit 20, for supplying electricity to a load, a heat exchange unit 40 for supplying water to the reforming unit 10 and the stack unit 20 and cooling the reforming unit 10 and the stack unit 20, a temperature sensing unit 110 installed in a system case S, for sensing a temperature of the stack unit 20 and of the entire system including the stack unit 20; an extinguishing unit 120 for spraying the water of the heat exchange unit 40 to the stack unit 20 and so forth, and a control unit 130 for properly controlling the above-described units 10, 20, 30, 40, 110, and 120.

The stack unit 20 has the fuel electrode 21 and the air electrode 22 arranged with an electrolyte film (not shown) interposed therebetween, and a separator plate (not shown) with a fuel flow path and an air flow path is installed on the outer surface of the fuel electrode 21 and air electrode 22 to form unit cells. The unit cells are stacked in layers to comprise the stack unit 20.

The electricity conversion unit 30 is constructed in such a manner that a DC created in the stack unit 20 is converted to an AC and supplied to an electrical appliance for AC power use, or a DC is supplied as it is to an electrical appliance for DC power use.

The heat exchange unit 40 includes a water storage tank 41 made of high heat resistant material, for charging a predetermined quantity of water therein, a cooling water line 42 for connecting between the stack unit 20 and the water storage tank 41 in a cyclic fashion, a heat radiator 43 installed at a middle portion of the cooling water line 42, for cooling the water recovered from the stack unit 20 to the water storage tank 41, and a circulation pump 44 installed at a middle portion of the cooling water line 42, for pumping the water of the water storage tank 41 and supplying the pumped water to the stack unit 20 and so forth.

The water storage tank 41 may be installed within the system case S along with the reforming unit 10, the stack unit 20, and the electricity conversion unit 30, as shown in FIG. 2, and in some cases, the water storage tank 41 may be installed outside the system case S and connected with the stack unit 20 via the cooling water line 42, as shown in FIG. 3.

The temperature sensing unit 110 is constructed by fixedly installing a temperature sensor (indicated by the same reference numeral as the temperature sensing unit) at an inner side surface of the system case S, and electrically connecting the temperature sensor 110 to the control unit 130. In some cases, the temperature sensor 110 may be installed at other regions such as an outer side surface of the system case S or the reforming unit 10, so as to sense an internal temperature or an external temperature.

The extinguishing unit 120 includes an extinguishing tube 121 made of high heat resistant material and installed to be communicated with the upper end of the water storage tank 41, for guiding the water of the water storage tank 41 to be sprayed to the system case S in case of fire, and an extinguishing pump 122 installed at a middle portion of the extinguishing tube 121, and operated by the control unit 130 to pump the water of the water storage tank 41 if a detected temperature is greater than a preset temperature according to a temperature of the system detected by the temperature sensor 110.

In the drawings, like reference numerals have been used throughout to designate identical elements.

The operational effects of the extinguishing system for a fuel cell according to the present invention are as follows.

That is, if the stack unit 20 reacts by a command from the control unit 130, the stack unit 20 generates electricity and heat, and the electricity is utilized as electrical energy required at homes or offices through the electricity conversion unit 30, while the heat is stored by a thermal energy storage system (not shown) or released. In this procedure, the circulation pump 44 is driven to pump the water of the water storage tank 41 to the cooling water line 42, and then supply it to the reforming unit 10 or the stack unit 20 in a cyclic fashion, thereby preventing overheating of the reforming unit 10 or the stack unit 20.

Here, during the procedure of generating electricity and heat in the fuel cell, the system temperature may be rapidly overheated above a preset temperature or a fire may take place due to an external or internal cause. At this time, if the stack unit 20 or the reforming unit 10 or the temperature sensor 110 provided in the system case S senses a temperature of the system and transmits it to the control unit 130, the control unit 130 determines that the current system temperature is excessively rising, so that the extinguishing pump 122 is operated, and the water filled in the water storage tank 41 of the heat exchange unit 40 is pumped and sprayed to the system case S through the extinguishing tube 121 by the operation of the extinguishing pump 122, thereby making it possible to lower the system temperature or extinguishing a fire at an early stage.

In this way, when a fuel cell is installed at a building or home, even if the system is overheated by various causes, or a fire takes place, this is sensed and the water filled in the water storage tank is automatically sprayed to the system, so that a failure or fire due to the overheating of the system is prevented, thereby increasing the stability of the fuel cell.

## Claims

1. An extinguishing system for a fuel cell, comprising:
a stack unit provided with a fuel electrode and an air electrode, for creating an electrical energy and a thermal energy by an electrochemical reaction between hydrogen and oxygen;
a temperature sensing unit installed at the stack unit, for sensing a temperature of the stack unit;
an extinguishing unit for switching to an extinguish mode for operation if the temperature sensed by the temperature sensing unit is greater than the preset temperature; and
a control unit electrically connected to the temperature sensing unit and the extinguishing unit, for controlling the operation of the extinguishing unit depending on a temperature change sensed by the temperature sensing unit.

2. The extinguishing system of claim 1, wherein the extinguishing unit sprays water if a temperature of the stack unit is greater than a preset temperature.

3. The extinguishing system of claim 1, wherein the extinguishing unit includes a water storage tank for filling a predetermined quantity of water therein, an extinguishing tube connected to the water storage tank so as to spray the water of the water storage tank to the stack unit, and an extinguishing pump installed at a middle portion of the extinguishing tube, for pumping the water of the water storage pump.

4. The extinguishing system of claim 3, wherein the water storage tank is connected to the cooling water line so that cooling water heat-exchanged with the stack unit can be circulated and filled therein.

5. An extinguishing system for a fuel cell, comprising:
a reforming unit refining a hydrocarbon fuel to produce hydrogen;
a stack unit provided with a fuel electrode connected to the reforming unit to receive hydrogen and an air electrode to receive oxygen from the air, for producing electricity and heat by an electrochemical reaction between hydrogen and oxygen;
a temperature sensing unit installed at the reforming unit, for sensing a temperature of the reforming unit;
an extinguishing unit for switching to an extinguish mode for operation if the temperature sensed by the temperature sensing unit is greater than a preset temperature; and
a control unit electrically connected to the temperature sensing unit and the extinguishing unit, for controlling the operation of the extinguishing unit according to a temperature change sensed by the temperature sensing unit.

6. The extinguishing system of claim 5, wherein the extinguishing unit sprays water if a temperature of the reforming unit is greater than a preset temperature.

7. The extinguishing system of claim 5, wherein the extinguishing unit includes a water storage tank for filling a predetermined quantity of water therein, an extinguishing tube connected to the water storage tank so as to spray the water of the water storage tank to the reforming unit, and an extinguishing pump installed at a middle portion of the extinguishing tube, for pumping the water of the water storage pump.

8. The extinguishing system of claim 7, wherein the water storage tank is connected to the cooling water line so that cooling water heat-exchanged with the reforming unit can be circulated and filled therein.

9. An extinguishing system for a fuel cell, comprising:
a system case;
a stack unit installed within the system case, and provided with a fuel electrode and an air electrode, for producing electricity and heat by an electrochemical reaction between hydrogen and oxygen;
a temperature sensing unit installed at the system case, for sensing a temperature of the system case;
an extinguishing unit for switching to an extinguish mode for operation if the temperature sensed by the temperature sensing unit is greater than a preset temperature; and
a control unit electrically connected to the temperature sensing unit and the extinguishing unit, for controlling the operation of the extinguishing unit according to a temperature change sensed by the temperature sensing unit.

10. The extinguishing system of claim 9, wherein the extinguishing unit sprays water if a temperature of the system case is greater than a preset temperature.

11. The extinguishing system of claim 9, wherein the extinguishing unit includes a water storage tank for filling a predetermined quantity of water therein, an extinguishing tube connected to the water storage tank so as to spray the water of the water storage tank to the system case, and an extinguishing pump installed at a middle portion of the extinguishing tube, for pumping the water of the water storage pump.

12. The extinguishing system of claim 11, wherein the water storage tank is connected to the cooling water line so that cooling water heat-exchanged with the system case can be circulated and filled therein.

13. The extinguishing system of claim 11, wherein the water storage tank is installed outside the system case.
